# FASCICULE DE BREVET EUROPEEN

(11) **EP 0 264 314 B1**
(45) Date de publication et mention de la délivrance du brevet: **20.01.1993**
(21) Numéro de dépôt: 87402073.8
(22) Date de dépôt: 16.09.1987
(51) Int. Cl.: H01H 83/00

(54) **Disjoncteur différentiel multipolaire à assemblage modulaire**
Mehrpoliger Differentialmodulschutzschalter
Multipole differential circuit breaker with a modular assembly

(30) Priorité: 23.09.1986 FR 8613369
(43) Date de publication de la demande: 20.04.1988
(73) Titulaire: MERLIN GERIN, F-38050 Grenoble Cédex (FR)
(72) Inventeur: Challande, René, F-38050 Grenoble Cedex (FR); Charbonneau, Michel, F-38050 Grenoble Cedex (FR); Paupert, Marc, F-38050 Grenoble Cedex (FR)
(74) Mandataire: Hecké, Gérard

(56) Documents cités:
- EP-A- 0 058 589
- DE-A- 1 256 775
- DE-A- 2 825 442
- FR-A- 2 088 489
- FR-A- 2 371 805
- FR-A- 2 437 692

## Description

L'invention est relative à un disjoncteur électrique multipolaire à protection différentielle formé par un assemblage modulaire côte à côte d'un bloc disjoncteur et d'un bloc déclencheur différentiel, ledit bloc disjoncteur ayant une première paire de faces latérales opposées, et renfermant un dispositif de coupure multipolaire à contacts séparables actionnés par un mécanisme de commande piloté par une manette et un déclencheur sensible à des courants de surcharge et de court-circuit, ledit bloc déclencheur différentiel sensible à un courant de fuite à la terre ayant un boîtier avec une deuxième paire de faces latérales opposées, et renfermant:

- un relais de déclenchement,
- une première liaison mécanique susceptible de transmettre un ordre de déclenchement du relais vers le mécanisme de commande lors de l'apparition d'un courant différentiel,
- une deuxième liaison mécanique pour dériver du mouvement d'ouverture de la manette un mouvement de réarmement automatique du relais,
- un circuit test ayant au moins une résistance d'essai dans un circuit dérivé de fuite,
- un bouton test dont la fermeture crée un courant différentiel artificiel,
- un interrupteur de protection destiné à déconnecter la résistance d'essai et à interrompre le courant différentiel artificiel dans le circuit test, après ouverture du disjoncteur par déclenchement différentiel,
- l'une des faces de la deuxième paire du boîtier du bloc déclencheur venant en engagement avec le bloc disjoncteur comportant des ouvertures de passage transversal des première et deuxième liaisons mécaniques.

Le bloc déclencheur différentiel d'un disjoncteur miniature renferme généralement le détecteur de courant différentiel formé par un transformateur en forme de tore entourant les conducteurs actifs du réseau à protéger. Dans la version électromécanique du déclencheur différentiel décrit dans le document FR-A-2.437.692, l'enroulement secondaire est relié directement au relais de déclenchement, et il est alors indispensable de disposer un bloc déclencheur pour chaque sensibilité de déclenchement.

Dans la version électronique du déclencheur différentiel, un circuit électronique est interposé entre l'enroulement secondaire et le relais pour obtenir un dispositif de protection différentielle à haute sensibilité. Un bloc déclencheur spécial est également nécessaire. Le nombre de blocs déclencheurs différents pose des problèmes de stockage et de coût de revient pour une gamme de disjoncteurs miniatures.

Le document DE-A-1.256.775 décrit un disjoncteur différentiel tétrapolaire, dont l'intérieur du boîtier est partagé en trois compartiments, à savoir un premier compartiment renfermant les pôles avec leurs chambres d'extinction d'arc, un deuxième compartiment comprenant le mécanisme de commande du disjoncteur, les deux déclencheurs de surcharge et de courtcircuit, et le transformateur différentiel pour la détection du courant de fuite, et un troisième compartiment pour le logement du relais de déclenchement différentiel, et du circuit test. Le transformateur différentiel se trouve dans le même compartiment que le mécanisme de commande et les déclencheurs de surcharge et de court-circuit. Un tel agencement ne permet pas de séparer physiquement le deuxième compartiment du premier compartiment.

L'objet de l'invention consiste à réaliser un disjoncteur différentiel modulaire utilisant le maximum de pièces communes pour chacune des versions électromécanique ou électronique.

Le disjoncteur selon l'invention est caractérisé en ce que l'autre face de la deuxième paire du boîtier du bloc déclencheur, sert alternativement de support:

- soit dans la version électromécanique à un bloc détecteur renfermant un transformateur totalisateur pour la détection d'un courant différentiel résiduel, ledit bloc détecteur étant alors accolé au bloc déclencheur différentiel,
- soit dans la version électronique à un bloc auxiliaire contenant un circuit électronique piloté par des signaux de déclenchement et d'alimentation en provenance du bloc détecteur, ledit bloc auxiliaire étant alors accolé au bloc déclencheur différentiel, et le bloc détecteur étant séparé du bloc déclencheur.

Le bloc déclencheur différentiel est relié par une liaison électrique interne, soit à l'enroulement de mesure du transformateur incorporé dans le bloc détecteur pour la version électromécanique, soit à la carte du circuit électronique du bloc auxiliaire, pour la version électronique. On remarque que les structures du bloc disjoncteur, du bloc déclencheur et du bloc détecteur sont identiques pour chaque version, la seule modification étant la présence ou l'absence du bloc auxiliaire avec un câblage approprié.

La face avant du bloc auxiliaire est équipée d'un sélecteur de réglage de la sensibilité de déclenchement différentiel, et d'un bouton de temporisation pour le réglage du retard du déclenchement différentiel. Le bloc déclencheur comporte une commande intégrée d'ouverture à distance par déclenchement différentiel artificiel, et une fenêtre de visualisation du déclenchement différentiel, située au voisinage du bouton test.

Le bloc détecteur est relié électriquement par une nappe à un connecteur du circuit électronique du bloc auxiliaire de manière à transmettre l'alimentation et le signal de mesure de courant différentiel à la carte du circuit électronique, et à assurer la connexion du circuit test avec le réseau en amont et en aval du transformateur.

Selon un développement de l'invention, le circuit électronique comporte des résistances de charge de l'enroulement secondaire du transformateur, coopérant avec le sélecteur de réglage pour choisir la sensibilité de déclenchement différentiel, ledit sélecteur étant en liaison avec un interrupteur auxiliaire destiné à être actionné par le bouton test pour imposer la commutation automatique du sélecteur sur la sensibilité la plus haute lors de la fermeture du circuit test.

D'autres avantages et caractéristiques ressortiront plus clairement de la description qui va suivre d'un mode de réalisation de l'invention donné à titre d'exemple non limitatif, et représenté aux dessins annexés, dans lesquels :

- La figure 1 représente le schéma électrique d'un disjoncteur à déclencheur différentiel électromécanique ;
- La figure 2 est une vue en élévation du bloc déclencheur différentiel susceptible d'être associé au bloc coupure du disjoncteur, représenté en position fermé-armé ;
- Les figures 3 à 5 montrent respectivement des vues en coupe du bloc déclencheur différentiel selon les lignes III-III, IV-IV, et V-V de la figure 2.
- La figure 6 montre une vue schématique de l'assemblage modulaire du disjoncteur selon la figure 1, comprenant un bloc de coupure, un bloc déclencheur différentiel, et un bloc détecteur à transformateur totalisateur ;
- La figure 7 est une vue en plan de la figure 6, le capot du bloc détecteur étant enlevé ;
- La figure 8 est le schéma électrique d'une variante de réalisation à disjoncteur équipé d'un déclencheur différentiel électronique ;
- La figure 9 représente la schéma du circuit électronique du bloc auxiliaire ;
- La figure 10 montre une vue schématique de l'assemblage modulaire du disjoncteur différentiel selon la figure 8.

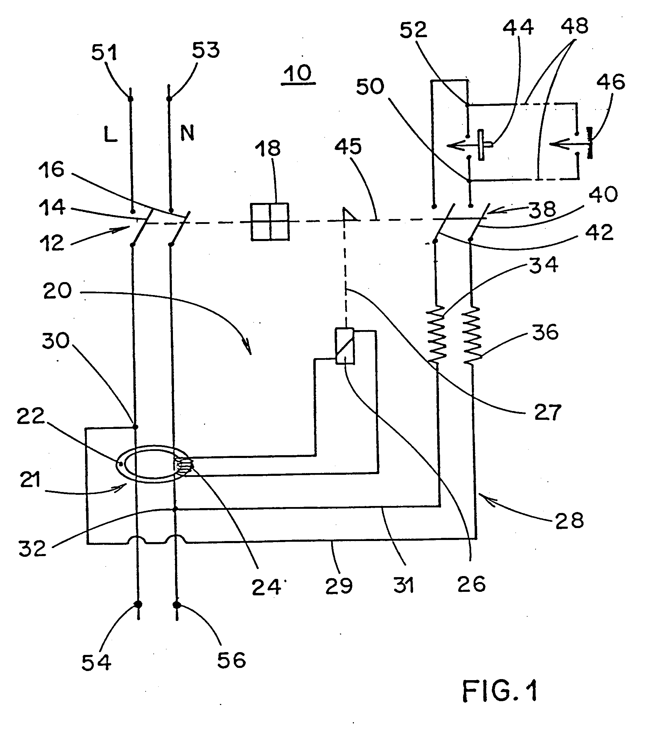

La figure 1 montre le schéma électrique d'un disjoncteur différentiel bipolaire inséré dans un réseau alternatif monophasé ayant un conducteur de phase L et un conducteur de neutre N. Le disjoncteur 10 différentiel comporte un dispositif de coupure 12 bipolaire ou unipolaire et neutre à contacts séparables 14, 16 actionnés par un mécanisme 18 de commande à manette 19, lequel coopère avec un déclencheur magnétothermique (non représenté) sensible à des courants de surcharge et de court-circuit, et un déclencheur différentiel 20 sensible à un courant de fuite à la terre.

Le déclencheur différentiel 20 comprend un détecteur de courant différentiel résiduel formé par un transformateur totalisateur 21 de détection d'un courant homopolaire, ayant un noyau 22 torique entourant les conducteurs actifs L et N, et un enroulement de mesure 24 bobiné sur le noyau 22. L'enroulement de mesure 24 est connecté électriquement à un relais électromagnétique 26 polarisé de déclenchement coopérant avec le mécanisme 18 par l'intermédiaire d'une première liaison mécanique 27 de déclenchement de manière à provoquer l'ouverture automatique des contacts 14, 16, lors de l'apparition d'un défaut différentiel dans les conducteurs L et N. Un circuit test 28 est associé au déclencheur différentiel 20 en étant relié électriquement par un conducteur 29 à un premier point de raccordement 30 du conducteur de phase L, et par un conducteur 31 à un deuxième point de raccordement 32 du conducteur de neutre N, respectivement en amont et en aval du transformateur totalisateur 21. Le circuit test 28 constitue un circuit dérivé de fuite comportant une paire de résistances 34, 36 d'essai, un dispositif d'interruption ou de protection 38 à double contacts de protection 40, 42, et un bouton test 44 du type poussoir. La fermeture manuelle du bouton test 44 simule un courant différentiel par insertion des résistances 34, 36 dans le circuit test 28, permettant de vérifier le bon fonctionnement du déclencheur différentiel 20. Le courant différentiel artificiel circule dans le circuit test 28 depuis le premier point de raccordement 30 du conducteur de phase L à traverse la résistance 36, le contact de protection 40, le bouton test 44, le contact de protection 42, la résistance 34, pour revenir au deuxième point de raccordement du conducteur de neutre N.

Lors de la phase de déclenchement différentiel pilotée par le relais 26, l'ouverture des contacts de protection 40, 42, du dispositif d'interruption 38 intervient automatiquement grâce à une deuxième liaison mécanique 45 du mécanisme 18, provoquant la mise hors circuit des deux résistances 34, 36, même en cas d'enfoncement prolongé du bouton test 44. Le dispositif d'interruption 38 du circuit test 28 est situé entre le bouton test 44 et les résistances 34, 36.

Une commande de déclenchement à distance peut être associée au mécanisme 18 du disjoncteur 10, et comprend un simple contact de télécommande 46 inséré dans un circuit de liaison 48 susceptible d'être connecté électriquement en parallèle aux bornes 50, 52 du bouton test 44. L'actionnement du contact de télécommande 46 procure le même effet que la fermeture locale du bouton test 44, c'est-à-dire une ouverture des contacts 14, 16 du disjoncteur 10 par déclenchement différentiel.

La présence dans le circuit test 28 des deux contacts de protection 40, 42 du dispositif d'interruption 38 permet après déclenchement différentiel d'isoler complètement le bouton test 44 et le contact de télécommande 46 du réseau. La mise hors tension par déconnexion complète des deux boutons 44, 46 s'opère par l'interruption simultanée des deux conducteurs 29, 31, indépendemment du mode de raccordement du disjoncteur 10, c'est-à-dire en cas d'alimentation par l'amont (bornes 51, 53) ou en cas d'alimentation opposée par l'aval (bornes 54, 56).

La présence d'une résistance d'essai 34, 36 dans chaque conducteur 31, 29 du circuit test 28 permet d'obtenir une sécurité totale pour l'utilisateur, même en cas de soudure accidentelle d'un des contacts de protection 40, 42.

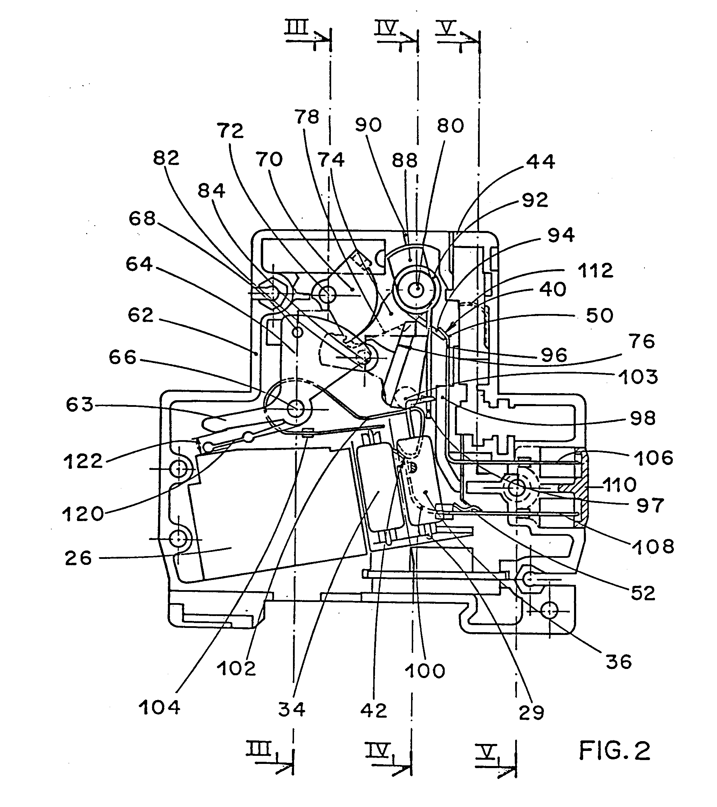

En référence aux figures 2 à 5, le mécanisme 60 du bloc déclencheur différentiel 20 est logé dans un boîtier 62 isolant susceptible d'être juxtaposé et accouplé au bloc disjoncteur 11 renfermant le dispositif de coupure 12, le mécanisme 18 et le déclencheur magnétothermique. Le relais de déclenchement 26 du mécanisme 60 comporte une palette mobile (non représentée) susceptible de coopérer avec un bras 63 d'actionnement d'un levier d'entraînement 64 monté à pivotement sur un axe 66 entre une position armée et une position déclenchée. Le levier d'entraînement 64 porte un doigt 68 constituant la première liaison mécanique 27 de déclenchement destinée à libérer le verrou du mécanisme 18 du disjoncteur 10 lorsque la palette du relais 26 est actionée vers la position déclenchée suite à un défaut différentiel.

La deuxième liaison mécanique 45 du mécanisme 60 différentiel relie la manette 19 du mécanisme 18 du disjoncteur 10 à une came 70 de transmission montée à pivotement sur un axe 72 de manière à suivre les mouvements d'ouverture et de fermeture de la manette 19. La came 70 de transmission coopère d'une part avec un bras 74 d'un levier de réarmement 76 et d'autre part avec un levier indicateur 78, montés tous les deux à pivotement sur un même axe 80.

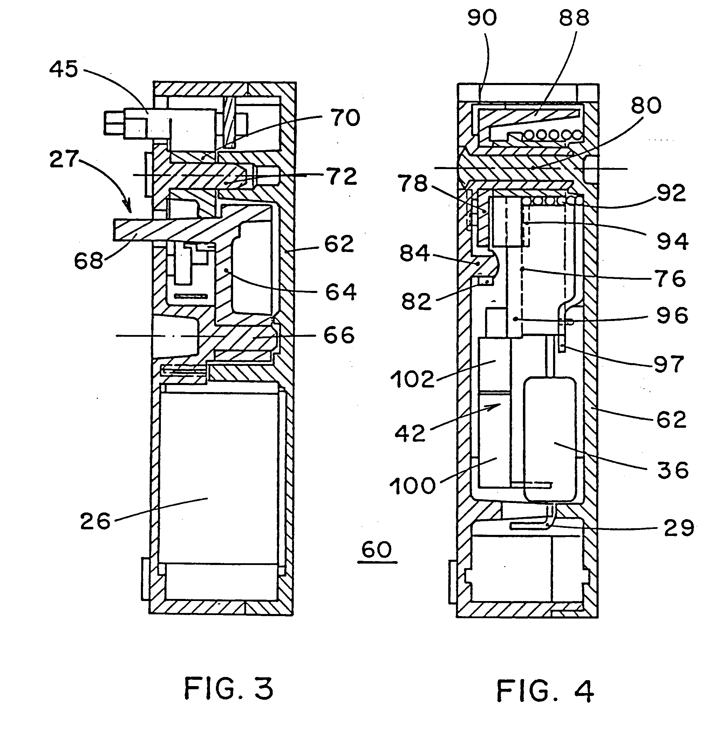

Un verrou 82 (fig. 2 et 4) est monté à pivotement sur un axe 84 et comporte un bec de retenue susceptible de verrouiller le levier indicateur 78 en une position inactive dans laquelle un voyant 88 est écarté d'une fenêtre 90 de visualisation ménagée dans la face avant du boîtier 62.

Le fonctionnement du mécanisme 60 différentiel est analogue à celui décrit dans le brevet français n° 2 437 692 auquel on se reportera pour de plus amples détails.

Sur l'axe isolant des leviers 76, 78 est enfilé un ressort 92 du type à torsion, réalisé en matériau métallique conducteur de l'électricité. L'une des extrémités 94 du ressort 92 prend appui sur un rebord du levier de réarmement 76 de manière à le solliciter dans le sens des aiguilles d'une montre, en appui de la came 70. L'extrémité 94 du ressort peut coopérer d'autre part avec une première languette 96 fixe conductrice pour constituer le contact de protection 40 du dispositif d'interruption 38 du circuit test 28. L'autre extrémité 97 du ressort 92 se trouve en engagement contre une butée 98 du boîtier 62, et est connectée à la résistance 36 branchée électriquement par le conducteur 29 au premier point de raccordement 30 du conducteur de phase L.

L'autre contact de protection 42 du dispositif d'interruption 38 comprend une deuxième languette 100 fixe conductrice susceptible de coopérer avec une pièce de contact 102 élastique. L'extrémité opposée de cette lame 102 est solidarisée à un ancrage 104 fixe du boîtier 62 entourant l'axe 66 de pivotement du levier d'entraînement 64, et est connectée électriquement à la résistance 34 insérée dans le conducteur 31 du circuit test 28. La lame de contact 102 est actionnée par un doigt 103 du levier de réarmement 76.

Les deux languettes 96, 100 fixes sont reliées respectivement à deux fiches 106, 108 de raccordement du circuit de liaison 48 du contact de télécommande 46, les deux fiches 106, 108 étant en liaison électrique avec les bornes 50, 52 du bouton test 44. Un bouchon 110 peut obturer l'ouverture d'accès aux fiches 106, 108 lorsque la commande de déclenchement à distance n'est pas connectée au déclencheur différentiel 20.

Le bouton test 44 est équipé d'une lame 112 élastique déformable décrite en détail dans le brevet français n° 2 526 995. La lame 112 vient en contact en position enfoncée du bouton test 44, avec la première languette 96 fixe du contact de protection 40.

Le fonctionnement du mécanisme 60 du déclencheur différentiel 20 selon les figures 2 à 5 est le suivant :

Lorsque le disjoncteur 10 est fermé correspondant à la position de la figure 2 du mécanisme 60 du déclencheur différentiel 20, l'apparition d'un défaut différentiel provoque le déclenchement du relais 26 entraînant le pivotement du levier d'entraînement 64 dans le sens des aiguilles d'une montre autour de l'axe 66, depuis la position armée jusqu'à la position déclenchée. Le doigt 68 de la première liaison mécanique 27 transmet l'ordre de déclenchement au verrou du mécanisme 18 du disjoncteur 10 qui ouvre les contacts 14, 16 du dispositif de coupure 12 et libère le verrou 82 du levier indicateur 78. L'ouverture du disjoncteur 10 s'accompagne d'un mouvement de pivotement de la manette 19 et de la came 70 de transmission dans le sens inverse des aiguilles d'une montre. La deuxième liaison mécanique 45 avec le mécanisme 18 dérive du mouvement d'ouverture du disjoncteur, un mouvement de réarmement automatique du relais 26 par l'intermédiaire du levier d'entraînement 64 sollicité par le levier de réarmement 76. Le levier indicateur 78 amène d'autre part le voyant dans une position active en regard de la fenêtre 90 de visualisation pour signaler le déclenchement sur défaut différentiel. Après réarmement du relais 26, la deuxième liaison mécanique 45 ramène le levier de réarmement 76 et le levier indicateur 78 dans leur position d'origine lors d'un déplacement manuel de la manette 19 de la position d'ouverture vers la position de fermeture du disjoncteur.

Une simulation d'un défaut différentiel s'opère par enfoncement du bouton poussoir 44 entraînant l'insertion des résistances 34, 36 dans le circuit test 28. La lame de contact 112 élastique vient en contact avec la borne 50 de la première languette 96. Après ouverture du disjoncteur 10, les deux contacts de protection 40, 42 s'ouvrent automatiquement par le mouvement de pivotement du levier de réarmement 76 dans le sens des aiguilles d'une montre. L'extrémité 94 du ressort 92 et la lame de contact 102 s'écartent respectivement des première et deuxième languettes 96, 100 fixes, et assurent la mise hors circuit des deux résistances 34, 36. Le circuit test 28 est ainsi maintenu fugitivement sous tension pendant le temps de réponse du mécanisme 18 du disjoncteur. Les bornes 50, 52 et les fiches 106, 108 sont hors tension lorsque le disjoncteur est ouvert.

Lorsque la manette 19 du disjoncteur 10 est ensuite actionnée vers la position de fermeture après réarmement du relais 26 du déclencheur différentiel 20, le levier de réarmement 76 sollicite les contacts de protection 40, 42 en position fermée. Un nouveau test peut alors être effectué.

On remarque que le bras 63 d'actionnement du levier 64 est commun aux première et deuxième liaisons mécaniques 27, 45, et sert à la fois d'organe de déclenchement, lors d'une émission d'un signal de déclenchement à la bobine du relais 26, et d'organe de réarmement du relais 26, lors de l'ouverture du disjoncteur. Au bras 63 est associée une languette élastique 120 (fig. 2) en matériau isolant, destinée à maintenir un jeu 122 prédéterminé entre le bras 63 et la palette après réarmement du relais 26, et lorsque la manette 19 du disjoncteur 10 est déplacée de la position d'ouverture vers la position de fermeture. La présence de ce jeu autorise une bonne transmission de l'ordre de déclenchement en provenance du relais 26.

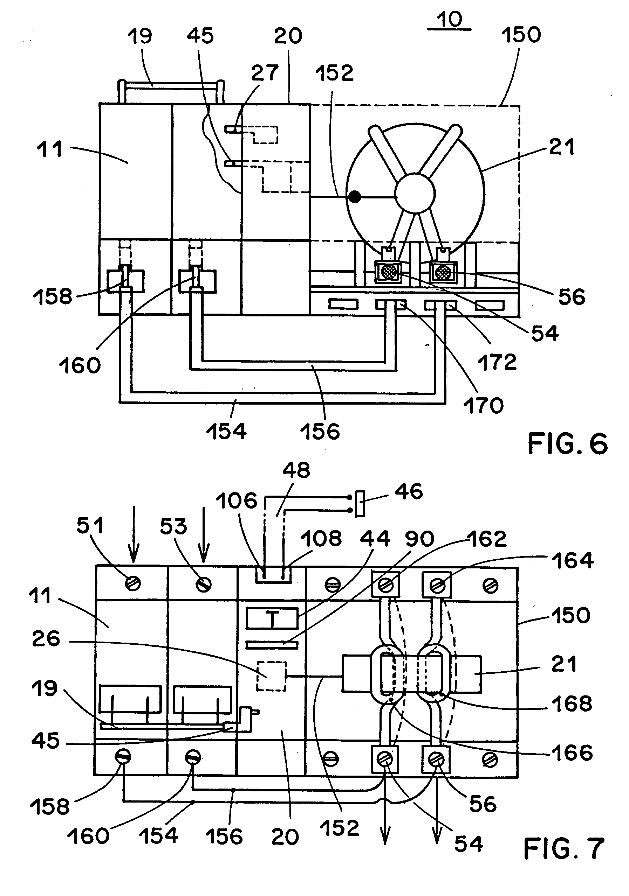

Les figures 6 et 7 montrent l'assemblage modulaire du disjoncteur différentiel 10 selon la figure 1, avec le bloc déclencheur différentiel 20 électromécanique intercalé entre la bloc disjoncteur 11 bipolaire et le bloc détecteur 150 à transformateur totalisateur 21 pour la détection du courant différentiel résiduel. L'enroulement secondaire 24 du transformateur 21 incorporé dans le bloc détecteur 150 est relié à la bobine du relais 26 du bloc déclencheur différentiel 20 par une liaison électrique interne 152. Chaque pôle du bloc disjoncteur 11 est par exemple tu type décrit dans la demande de brevet français n° 86 00111 déposée le 03.01.86 par la demanderesse, mais tout autre disjoncteur miniature multipolaire peut être utilisé. La manette 19 est accouplée mécaniquement à la deuxième liaison mécanique 45 du bloc déclencheur différentiel 20, tandis que la première liaison mécanique 27 de déclenchement pilote le verrou du mécanisme 18.

La disjoncteur 10 différentiel comporte une paire de conducteurs intermédiaires de raccordement 154, 156 connectés entre les bornes inférieures 158, 160 du bloc disjoncteur 11 bipolaire et les bornes supérieures 162, 164 du bloc détecteur 150. L'alimentation du disjoncteur différentiel 10 s'effectue à propre courant, et le raccordement des conducteurs L, N du réseau s'opère aux bornes amont 51, 53 du bloc disjoncteur 11, et aux bornes aval 54, 56 du bloc détecteur 150. Le tore 22 du transformateur totalisateur 21 comporte deux bobines primaires 166, 168, dont les extrémités opposées sont reliées aux bornes supérieures 162, 164 et aval 54, 56 correspondantes du bloc détecteur 150. L'entrée des conducteurs intermédiaires 154, 156 dans le bloc détecteur 150 s'effectue par des ouvertures 170, 172 disposées sous les bornes aval 54, 56.

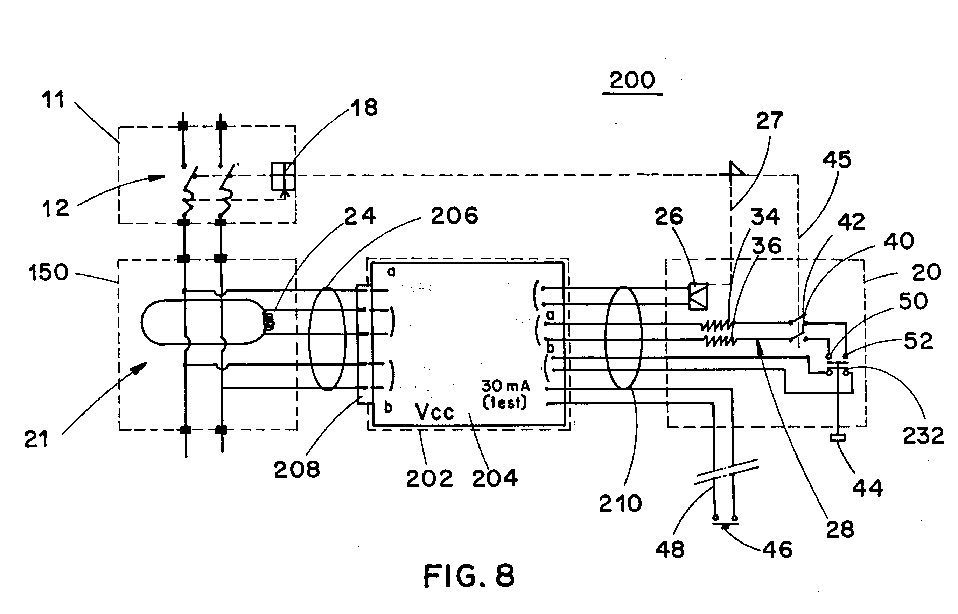

Les figures 8 à 10 concernent une variante de réalisation d'un disjoncteur différentiel 200 électronique à source auxiliaire d'alimentation. Les mêmes numéros de repères seront utilisés pour désigner des pièces identiques ou similaires à celles du disjoncteur 10 des figures 1 à 7. Le disjoncteur différentiel 200 comporte un assemblage modulaire d'un bloc disjoncteur 11 bipolaire accolé au bloc déclencheur différentiel 20, et à un bloc auxiliaire 202 renfermant un circuit électronique 204 de traitement des signaux en provenance du bloc détecteur 150 séparé.

Une nappe 206 de cinq fils de liaison relie le bloc détecteur 150 à un connecteur 208 d'entrée du circuit électronique 204 pour assurer d'une part l'émission d'un premier signal de mesure de l'enroulement secondaire 24, et d'un deuxième signal pour la source d'alimentation Vcc, et d'autre part le raccordement du circuit test 28 du bloc déclencheur différentiel 20 à bouton poussoir 44.

Le circuit électronique 204 du bloc auxiliaire 202 est relié au relais 26, au circuit test 28 et aux boutons test 44 et de télécommande 46 du bloc déclencheur 20 par une liaison interne 210 de huit fils.

La face avant du bloc électronique auxiliaire 202 est dotée d'un sélecteur de réglage 212 de la sensibilité de déclenchement différentiel (par exemple 30 m A, 300 m A, 1 A, 3 A), et d'un bouton de temporisation 214 pour le réglage du retard du déclenchement différentiel.

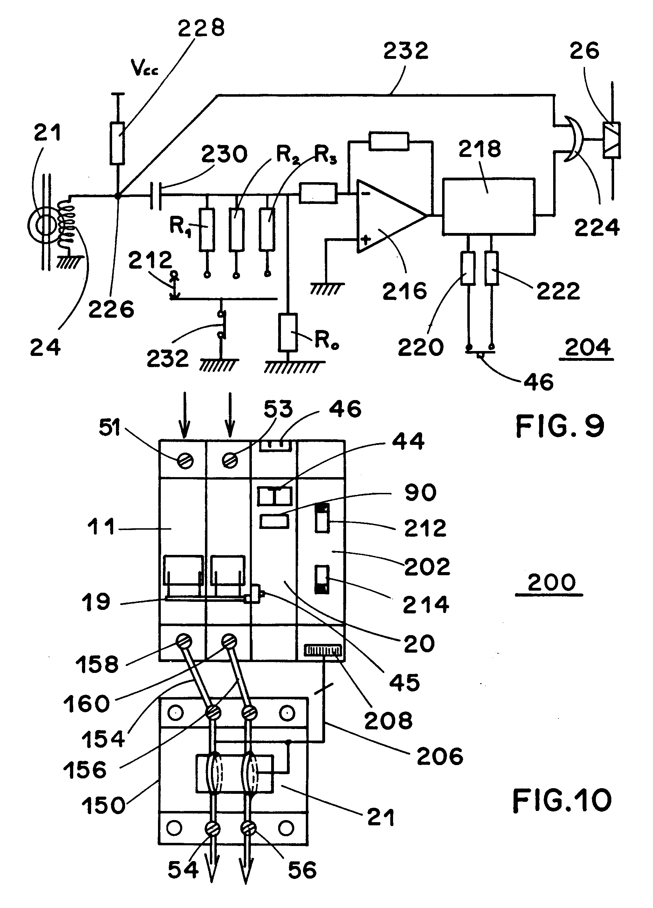

Le circuit électronique 204 (fig. 9) du bloc auxiliaire 202 comporte un réseau de résistances R0, R1, R2, R3, du réglage de la sensibilité, et l'enroulement secondaire 24 du transformateur 21 totalisateur est chargé par l'une ou plusieurs de ces résistances R0 à R3 en fonction de la position du sélecteur 212. La sensibilité la plus haute de 30 m A correspond à l'insertion de la résistance R0, tandis que les sensibilités de 300 m A, 1 A, et 3 A correspondent à la mise en parallèle de R1, R2, R3 avec la résistance R0. La sortie du réseau de résistances R0 à R3 est reliée à un amplificateur opérationnel 216, agencé en comparateur qui pilote un circuit de traitement 218 du signal de déclenchement différentiel. Le contact de télécommande 46 est connecté directement au circuit de traitement 218 par des résistances 220, 222. La sortie du circuit de traitement 218 est branchée à l'une des entrées d'une porte logique OU 224 qui commande l'excitation de la bobine du relais 26 de déclenchement.

La borne de sortie 226 de l'enroulement secondaire 24 du transformateur 21 est reliée par une résistance 228 à le source d'alimentation Vcc, et par un condensateur 230 au réseau de résistances R0 à R3. L'autre entrée de la porte logique OU 224 est branchée par un conducteur 232 à la borne 226 de l'enroulement 24. Une mauvaise continuité du circuit secondaire du bloc détecteur 150 provoque une montée en potentiel de la borne 226, temporisée par la constante de temps RC de la résistance 228 et du condensateur 230. La porte logique OU 224 peut ainsi recevoir deux ordres de déclenchement comprenant un premier signal de déclenchement sur défaut différentiel élaboré par le circuit de traitement 218, et un deuxième signal de déclenchement sur défaut de continuité du circuit secondaire. La discrimination des deux signaux de déclenchement s'opère par les délais d'ouverture du disjoncteur différentiel 200.

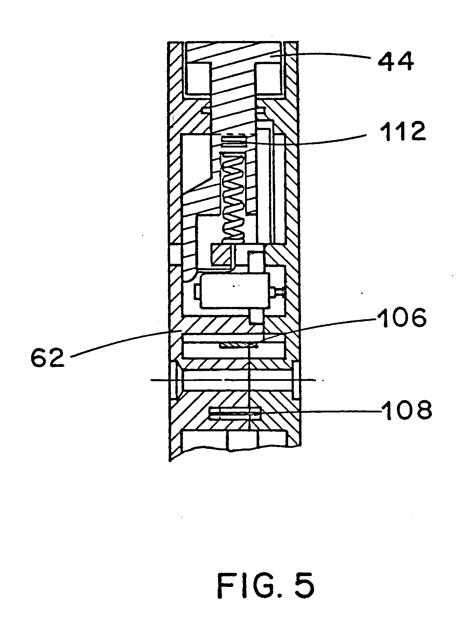

Le sélecteur 212 de réglage de la sensibilité est connecté à la masse par l'intermédiaire d'un interrupteur auxiliaire 232 (fig. 8 et 9). Ce dernier est logé dans le bloc déclencheur 20 et est actionné lors de l'enfoncement du bouton test 44 (voir fig. 2 et 5), provoquant avec la fermeture du circuit test 28 une interruption automatique de la liaison du sélecteur 212 avec la masse. Il en résulte une commutation forcée sur la sensibilité la plus haute, soit 30 m A (résistance R0), indépendamment de la position du sélecteur 212. En fonctionnement sans test du disjoncteur 200, une dégradation du sélecteur 212 ou de l'interrupteur auxiliaire 232 conduit à une augmentation de la sensibilité du circuit électronique 204.

Dans la version électromécanique du disjoncteur différentiel 10 de la figure 7, le bloc détecteur 150 fait partie de l'assemblage modulaire en étant obligatoirement accolé au bloc déclencheur 20. Dans la version électronique du disjoncteur différentiel 200 de la figure 10, le bloc auxiliaire 202 du circuit électronique 204 est disposé côte à côte avec le bloc déclencheur 20, alors que le bloc détecteur 150 est séparé physiquement de l'assemblage modulaire, avec simples liaisons électriques avec le bloc disjoncteur 11 (conducteurs 154, 156), et le circuit électronique 204 (nappe 206).

## Revendications

1. Disjoncteur électrique multipolaire à protection différentielle formé par un assemblage modulaire côte à côte d'un bloc disjoncteur (11) et d'un bloc déclencheur différentiel (20), ledit bloc disjoncteur (11) ayant une première paire de faces latérales opposées, et renfermant un dispositif de coupure (12) multipolaire à contacts (14,16) séparables actionnés par un mécanisme de commande (18) piloté par une manette (19) et un déclencheur sensible à des courants de surcharge et de court-circuit, ledit bloc déclencheur différentiel sensible à un courant de fuite à la terre ayant un boîtier (62) avec une deuxième paire de faces latérales opposées, et renfermant:
- un relais (26) de déclenchement,
- une première liaison mécanique (27) susceptible de transmettre un ordre de déclenchement du relais (26) vers le mécanisme de commande (18) lors de l'apparition d'un courant différentiel,
- une deuxième liaison mécanique (45) pour dériver du mouvement d'ouverture de la manette (19) un mouvement de réarmement automatique du relais (26),
- un circuit test (28) ayant au moins une résistance d'essai (34, 36) dans un circuit dérivé de fuite,
- un bouton test (44) dont la fermeture crée un courant différentiel artificiel,
- un interrupteur de protection (38) destiné à déconnecter la résistance d'essai et à interrompre le courant différentiel artificiel dans le circuit test (28), après ouverture du disjoncteur (10, 200) par déclenchement différentiel,
- l'une des faces de la deuxième paire du boîtier (62) du bloc déclencheur (20) venant en engagement avec le bloc disjoncteur (11) comportant des ouvertures de passage transversal des première et deuxième liaisons mécaniques (27, 45),caractérisé en ce que:
l'autre face de la deuxième paire du boîtier (62) du bloc déclencheur (20), sert alternativement de support:
- soit dans la version électromécanique à un bloc détecteur (150) renfermant un transformateur (21) totalisateur pour la détection d'un courant différentiel résiduel, ledit bloc détecteur (150) étant alors accolé au bloc déclencheur différentiel (20),
- soit dans la version électronique à un bloc auxiliaire (202) contenant un circuit électronique (204) piloté par des signaux de déclenchement et d'alimentation en provenance d'un bloc détecteur (150), ledit bloc auxiliaire (202) étant alors accolé au bloc déclencheur différentiel (20), et le bloc détecteur (150) étant séparé du bloc déclencheur (20).

2. Disjoncteur électrique selon la revendication 1, caractérisé en ce que le bloc déclencheur (20) différentiel est relié par une liaison électrique (152, 210) interne, soit à l'enroulement (24) de mesure du transformateur (21) incorporé dans le bloc détecteur (150) pour la version électromécanique, soit à la carte du circuit électronique (204) du bloc auxiliaire (202) pour la version électronique.

3. Disjoncteur électrique selon la revendication 2, caractérisé en ce que la face avant du bloc auxiliaire (202) est équipée d'un sélecteur de réglage (212) de la sensibilité de déclenchement différentiel, et d'un bouton de temporisation (214) pour le réglage du retard du déclenchement différentiel, et que le bloc déclencheur (20) comporte une commande intégrée d'ouverture à distance par déclenchement différentiel artificiel, et une fenêtre (90) de visualisation du déclenchement différentiel, située au voisinage du bouton test (44).

4. Disjoncteur électrique selon l'une des revendications 1 à 3, caractérisé en ce que le bloc détecteur (150) est relié électriquement par une nappe (206) à un connecteur (208) du circuit électronique (204) du bloc auxiliaire (202) de manière à transmettre l'alimentation et le signal de mesure de courant différentiel à la carte du circuit électronique (204), et à assurer la connexion du circuit test (28) avec le réseau en amont et en aval du transformateur (21).

5. Disjoncteur électrique selon la revendication 4, caractérisé en ce que le circuit électronique (204) comporte des résistances R0 à R3 de charge de l'enroulement secondaire (24) du transformateur (21), coopérant avec le sélecteur de réglage (212) pour choisir la sensibilité de déclenchement différentiel, ledit sélecteur (212) étant en liaison avec un interrupteur auxiliaire (232) destiné à être actionné par le bouton test (44) pour imposer la commutation automatique du sélecteur (212) sur la sensibilité la plus haute lors de la fermeture du circuit test (28).

6. Disjoncteur électrique selon la revendication 5, caractérisé en ce que le circuit électronique (204) comporte, de plus :
- un circuit de traitement (218) du signal différentiel, piloté par un comparateur à amplificateur opérationnel (216) relié à l'enroulement secondaire (24) par l'intermédiaire des résistances R0 à R3 de réglage de la sensibilité,
- un circuit de contrôle (232, 228, 230) de la continuité du circuit secondaire, agencé entre l'enroulement secondaire (24) du transformateur totalisateur (21) et le circuit électronique (204),
- et une porte logique (224) susceptible de prendre en compte l'un quelconque des signaux de déclenchement sur défaut différentiel ou défaut de continuité du circuit secondaire, pour commander le relais (26) de déclenchement.

## Claims

1. A multipole electrical circuit breaker with earth leakage protection formed by modular side-by-side assembly of a circuit breaker unit (11) and an earth leakage trip unit (20), said circuit breaker unit (11) having a first pair of opposite side faces, and housing a multipole breaking device (12) with separable contacts (14, 16) actuated by an operating mechanism (18) operated by a handle (19) and a trip device sensitive to overload and short-circuit currents, said earth leakage trip unit sensitive to an earth leakage current having a case (62) with a second pair of opposite side faces, and housing :
- a trip relay (26),
- a first mechanical link (27) capable of transmitting a tripping order from the relay (26) to the operating mechanism (18) when an earth leakage fault occurs,
- a second mechanical link (45) to derive from the opening movement of the handle (19) an automatic resetting movement of the relay (26),
- a test circuit (28) having at least one test resistor (34, 36) in a leakage branch circuit,
- a test button (44) closing of which creates an artificial earth leakage current,
- a protective switch (38) designed to disconnect the test resistor and to disconnect the test resistor and to interrupt the artificial earth leakage current in the test circuit (28), after opening of the circuit breaker (10, 200) by earth leakage tripping,
- one of the faces of the second pair of the case (62) of the trip unit (20) coming into engagement with the circuit breaker unit (11) comprising openings for the transverse passage of the first and second mechanical links (27, 45), characterized in that :
the other face of the second pair of the case (62) of the trip unit (20) acts alternately as support :
- either in the electromechanical version for a detector unit (150) containing a summing transformer (21) for detection of a residual earth leakage current, said detector unit (150) then being adjoined to the earth leakage trip unit (20),
- or in the electronic version for an auxiliary unit (202) containing an electronic circuit (204) controlled by tripping and power supply signals from a detector unit (150), said auxiliary unit (202) then being adjoined to the earth leakage trip unit (20), and the detector unit (150) being separate from the trip unit (20).

2. The electrical circuit breaker according to claim 1, characterized in that the earth leakage trip unit (20) is connected by an internal electrical connection (152, 210) either to the measurement winding (24) of the transformer (21) incorporated in the detector unit (150) for the electro-mechanical version or to the board of the electronic circuit (204) of the auxiliary unit (202) for the electronic version.

3. The electrical circuit breaker according to claim 2, characterized in that the front face of the auxiliary unit (202) is equipped with an earth leakage tripping sensitivity setting selector (212), and with a time delay button (214) for setting of the earth leakage tripping delay, and that the trip unit (20) comprises a built-in remote opening mechanism by artificial earth leakage tripping, and a window (90) for visualization of earth leakage tripping, located in proximity to the test button (44).

4. The electrical circuit breaker according to one of the claims 1 to 3, characterized in that the detector unit (150) is electrically connected by a flat connecting strap (206) to a connector (208) of the electronic circuit (204) of the auxiliary unit (202) in such a way as to transmit the power supply and the earth leakage current measurement signal to the board of the electronic circuit (204) and to provide connection of the test circuit (28) with the power supply system line side and load side of the transformer (21).

5. The electrical circuit breaker according to claim 4, characterized in that the electronic circuit (204) comprises load resistors R0 to R3 of the secondary winding (24) of the transformer (21), cooperating with the setting selector (212) to select the earth leakage tripping sensitivity, said selector (212) being in connection with an auxiliary switch (232) designed to be actuated by the test button (44) to impose automatic switching of the selector (212) to the highest sensitivity when the test circuit (28) is closed.

6. The electrical circuit breaker according to claim 5, characterized in that the electronic circuit (204) comprises, in addition :
- a processing circuit (218) of the earth leakage signal, controlled by an operational amplifier comparator (216) connected to the secondary winding (24) by means of the sensitivity adjustment resistors R0 to R3,
- a monitoring circuit (232, 228, 230) of the secondary circuit continuity, arranged between the secondary winding (24) of the summing transformer (21) and the electronic circuit (204),
- and a logic gate (224) capable of taking into account any of the tripping signals on an earth leakage or continuity fault of the secondary circuit, to control the tripping relay (26).

## Patentansprüche

1. Mehrpol-Leistungsschalter mit Differenzstromschutz in modularer Reihenbauweise, bestehend aus einem Leistungsschalterblock (11) und einem Differenzstrom-Auslöseblock (20), wobei der genannte Leistungsschalterblock (11) ein erstes Paar gegenüberliegender Seitenwände aufweist und eine Mehrpol-Ausschaltvorrichtung (12) mit trennbaren Kontakten (14, 16) umfaßt, die durch einen über einen Kipphebel (19) bzw. einen Überlast- und Kurzschlußstromauslöser angetriebenen Schaltmechanismus (18) betätigt werden, und der genannte, einen Erdfehlerstrom erfassende Differenzstrom-Auslöseblock von einem Gehäuse (62) mit einem zweiten Paar gegenüberliegender Seitenwände umschlossen wird und folgende Teile umfaßt:
- ein Auslöserelais (26),
- eine erste mechanische Verbindung (27) zur Übertragung des Auslösebefehls des Relais (26) an den Schaltmechanismus (18) bei Auftreten eines Differenzstroms,
- eine zweite mechanische Verbindung (45) zur Nutzung der Ausschaltbewegung des Kipphebels (19) für das automatische Wiederspannen des Relais (26),
- einen Test-Stromkreis (28) mit mindestens einem Test-Widerstand (34, 36) in einem parallelen Fehlerstromkreis,
- einen Test-Drucktaster (44), bei dessen Schließen ein künstlich erzeugter Differenzstrom fließt,
- ein Schutzschalter (38) zur Trennung des Test-Widerstands und Unterbrechung des künstlich erzeugten Differenzstroms im Test-Stromkreis (28) nach dem Öffnen des Leistungsschalters (10, 200) aufgrund einer Differenzstrom-Auslösung,
- eine Wand des zweiten Seitenwandpaares am Gehäuse (62) des Auslöseblocks (20), die an den Leistungsschalterblock (11) gereiht wird und in Querrichtung Öffnungen zur Durchführung der ersten und zweiten mechanischen Verbindung (27, 45) aufweist, dadurch gekennzeichnet, daß:
die andere Wand des zweiten Seitenwandpaares am Gehäuse (62) des Auslöseblocks (20) als Auflagefläche dient, und zwar
- entweder in der elektromechanischen Ausführung für einen Fehlerstrom-Meßblock (150), der einen Summenstromwandler (21) zur Erfassung eines Differenzstroms umfaßt, wobei in diesem Fall der genannte Meßblock (150) an den Differenzstrom-Auslöseblock (20) gereiht wird,
- oder in der elektronischen Ausführung für einen Hilfsschaltblock (202), der eine mit Auslösebefehlen und Versorgungsspannungen eines Fehlerstrom-Meßblocks (150) beaufschlagte elektronische Schaltung (204) enthält, wobei in diesem Fall der genannte Hilfsschaltblock (202) an den Differenzstrom-Auslöseblock (20) gereiht und der Fehlerstrom-Meßblock (150) vom Differenzstrom-Auslöseblock (20) getrennt werden.

2. Leistungsschalter nach Anspruch 1, dadurch gekennzeichnet, daß der Differenzstrom-Auslöseblock (20) über interne Leitungen (152, 210) in der elektromechanischen Ausführung mit der in den Fehlerstrom-Meßblock (150) integrierten Meßwicklung (24) des Stromwandlers (21) und in der elektronischen Ausführung mit der elektronischen Schaltung (204) des Hilfsschaltblocks (202) elektrisch verbunden ist.

3. Leistungsschalter nach Anspruch 2, dadurch gekennzeichnet, daß die Frontseite des Hilfsschaltblocks (202) mit einem Wahlschalter (212) zur Einstellung des Ansprechwerts für die Differenzstrom-Auslösung sowie einem Zeitregler (214) zur Einstellung der Ansprechverzögerung für die Differenzstrom-Auslösung bestückt ist und daß der Auslöseblock (20) eine Fernbetätigungsvorrichtung zur Auslösung durch einen künstlich erzeugten Differenzstrom sowie ein in der Umgebung des Test-Drucktasters (44) angeordnetes Fenster (90) zur Anzeige der Auslösung aufgrund eines Differenzstroms aufweist.

4. Leistungsschalter nach einem der Ansprüche 1 bis 3, dadurch gekennzeichnet, daß der Fehlerstrom-Meßblock (150) über ein Leiterbündel (206) mit einem Steckverbinder (208) der elektronischen Schaltung (204) des Hilfsschaltblocks (202) verbunden ist, um die Versorgungspannung und das Differenzstrom-Meßsignal an die elektronische Schaltung (204) zu übertragen und die Verbindung des Test-Stromkreises (28) mit dem Netz einspeise- und abgangsseitig vom Stromwandler (21) zu gewährleisten.

5. Leistungsschalter nach Anspruch 4, dadurch gekennzeichnet, daß die elektronische Schaltung (204) mit Lastwiderständen R0 bis R3 für die Sekundärwicklung (24) des Stromwandlers (21) bestückt ist, die mit dem Wahlschalter (212) zur Einstellung des Ansprechwerts der Differenzstrom-Auslösung zusammenwirken, wobei der genannte Wahlschalter (212) mit einem über einen Drucktaster (44) anzusteuernden Hilfskontakt (232) verbunden ist, der beim Schließen des Test-Stromkreises (28) die automatische Umschaltung des Wahlschalters (212) auf den höchsten Ansprechwert bewirkt.

6. Leistungsschalter nach Anspruch 5, dadurch gekennzeichnet, daß die elektronische Schaltung (204) darüber hinaus folgende Komponenten umfaßt:
- eine Differenzstrom-Signalverarbeitungsschaltung (218), die von einem über die Lastwiderstände R0 bis R3 mit der Sekundärwicklung (26) des Stromwandlers verbundenen Komparator mit Operationsverstärker (216) angesteuert wird,
- einen zwischen die Sekundärwicklung (24) des Summenstromwandlers (21) und die elektronische Schaltung (204) geschalteten Überwachungsstromkreis (232, 228, 230) zur Überprüfung des Stromflusses im Sekundärstromkreis
- und eine Logikschaltung (224) zur Ansteuerung des Auslöserelais (26), die in der Lage ist, ein Auslösesignal sowohl aufgrund eines Differenz-Fehlerstroms als auch aufgrund einer Unterbrechung des Stromflusses im Sekundärstromkreis zu erfassen.
